(19) Europäisches Patentamt

European Patent Office

Office européen des brevets

(11) **EP 1 683 763 A1**

(12) **EUROPEAN PATENT APPLICATION**
published in accordance with Art. 158(3) EPC

(43) Date of publication:
26.07.2006 Bulletin 2006/30

(51) Int Cl.:
*C01G 23/07* (2006.01)

(21) Application number: 04773581.6

(22) Date of filing: 28.09.2004

(86) International application number:
**PCT/JP2004/014553**

(87) International publication number:
**WO 2005/033009 (14.04.2005 Gazette 2005/15)**

(84) Designated Contracting States:
**AT BE BG CH CY CZ DE DK EE ES FI FR GB GR HU IE IT LI LU MC NL PL PT RO SE SI SK TR**

(30) Priority: 01.10.2003 JP 2003343188
01.10.2003 JP 2003343189

(71) Applicant: TOHO TITANIUM CO., LTD.
**Chigasaki-shi,
Kanagawa 253-8510 (JP)**

(72) Inventor: SAKAI, H.,
**Toho Titanium Co., Ltd
Chigasaki-shi, Kanagawa 2538510 (JP)**

(74) Representative: Fiesser, Gerold Michael et al
**Kahlhöfer Neumann Herzog Fiesser
Patentanwälte
Isartorplatz 8
D-80331 München (DE)**

(54) **TITANIUM DIOXIDE POWDER AND METHOD FOR PRODUCTION THEREOF**

(57)     A titanium dioxide powder which has a rutile content of 80 % or more and a BET surface area of 30 m$^2$/g or more; and a method for producing the titanium dioxide powder wherein a titanium tetrachloride gas, an oxygen gas, a hydrogen gas, and steam are reacted in a gas phase, which comprises supplying the steam in the chemically equivalent amount necessary for oxidizing all of the titanium tetrachloride gas or more. The titanium dioxide powder is suitably used as a coating material for a glass substrate and a filler. The method can be employed for arbitrarily producing a titanium dioxide powder which is composed of fine particles having a great specific surface area and also has a very high rutile content or an anatase type titanium dioxide powder having a high specific surface area.

EP 1 683 763 A1

**Description**

TECHNICAL FIELD

The present invention relates to a titanium dioxide powder having a large specific surface area with a high rutile content and a method for producing the same. More particularly, the invention relates to a method for producing a titanium dioxide powder having a high refractive index, a large specific surface area, and a freely controllable rutile content, suitable for use as an electronic material, a UV shielding material, a photocatalyst material, an antireflection film for displays, a filler for glass material used for a plasma display substrate partition and the like, and a carrier of various catalysts.

BACKGROUND ART

Titanium dioxide powder has been used as a white pigment for many years. More recently, titanium dioxide powder is widely used as a UV shielding material for cosmetics and the like, a material for forming a photocatalyst, capacitor, or thermistor, and a sintered material used for electronic materials such as a raw material of barium titanate. Due to possession of a large refractive index in a wavelength region near visible rays, the titanium dioxide absorbs almost no light in the visible ray region. For these reasons, titanium dioxide powder is recently used as a material that requires UV shielding properties such as a cosmetic composition, drug, or coating material and as an antireflection film for a display part of a liquid crystal display and a plastic lens. The antireflection film typically comprises a layer formed by alternately laminating a layer of a resin with a low refractive index, such as a fluororesin or silicon-containing resin, and a high refractive index layer. Titanium dioxide is used as a material for the high refractive index layer of the antireflection film. In addition, in plasma displays for which the demand is recently increasing, a glass material used for substrate partitions is covered with titanium dioxide in order to promote brightness and improve reflectance or contains rutile titanium dioxide powder added to it in order to improve the refractive index.

The rutile titanium dioxide is known to be more excellent than anatase titanium dioxide in optical characteristics, such as UV shielding characteristics and high refractive index, and electrical properties such as high dielectric properties.

Various methods of forming titanium dioxide films have conventionally been studied. As the method for forming a titanium dioxide film on a substrate surface, for example, dry methods such as a vapor deposition method, CVD method, sputtering method, and the like and wet methods such as a sol-gel method, electroplating method, electrolytic polymerization method, and the like are known. However, these methods of manufacturing rutile titanium dioxide film require heat treatment at 600°C or more after forming the titanium dioxide film. For this reason, the substrates that can be used are restricted to an inorganic material such as glass, ceramics, or metal, imposing a limitation to the application of the rutile titanium dioxide film. For this reason, a method of producing a dispersion liquid such as a paste of titanium dioxide powder with crystallinity such as rutile titanium dioxide and applying the dispersion liquid to a substrate to form a film has been studied. However, when this method of applying titanium dioxide powder is used, it is necessary to decrease the particle size of the titanium dioxide powder to ensure transparency of the film. However, titanium dioxide powder with a small particle size produced using a conventional gas phase or liquid phase method is not rutile in crystal form, but contains a considerable amount of amorphous or anatase titanium dioxide powder. The resulting titanium dioxide powder must be treated with heat to convert the crystal form into rutile-type. The heat treatment, however, agglutinates the particles, making it difficult to obtain rutile titanium dioxide powder while maintaining fine particles.

As a method for obtaining fine particles of rutile titanium dioxide, JP-A-7-291629 discloses a method of converting ultrafine particles of amorphous titanium dioxide into ultrafine particles of rutile titanium dioxide by aging the amorphous titanium dioxide in an inorganic acid aqueous solution. Specifically, the method comprises maturing amorphous titanium dioxide produced from an organic titanium compound or titanium tetrachloride in an aqueous solution of hydrochloric acid or sulfuric acid for 72 to 2,400 hours, and washing and drying the aged product to obtain fine particles of rutile titanium dioxide.

Although rutile crystals are included in the titanium dioxide fine particles obtained by the method described in JP-A-7-291629, the ratio of rutile form crystals is not necessarily high. Much more improvement is desired. Moreover, such a method requires a long time for production and has a complicated process, giving rise to low productivity. It is therefore difficult to adopt the method in industrial manufacturing in practice.

Although titanium dioxide powder of fine particles with a comparatively large specific surface area has conventionally been known, such a known titanium dioxide powder is a mixture of rutile form titanium dioxide and anatase form titanium dioxide, in which the rutile content is about 70% or less when the specific surface area is 30 $m^2$/g or more. Thus, because conventional titanium dioxide powder is usually a mixture of rutile form titanium dioxide and anatase form titanium dioxide, the particle size distribution is comparatively broad.

On the other hand, when titanium dioxide powder is used as a raw material for barium titanate which is a dielectric material for laminated ceramic capacitors, the particle size and particle size distribution of the dielectric powder have been known to vary according to the particle size and particle size distribution of titanium dioxide used. The number of layers in laminated ceramic capacitors is increasing, while the thicknesses of dielectric layers and electrode layers are decreasing year by year, as the ceramic capacitors are miniaturized and their capacity is increased. Therefore, titanium dioxide powder having a smaller particle size and narrower particle size distribution is demanded. In addition, dispersibility of the powder in solvents is also important. Thus, the narrow particle size distribution is also demanded from the requirement for good dispersibility.

Anatase form titanium dioxide is known to have higher optical activity and, therefore, to be more suitable as a photocatalyst material than rutile form titanium dioxide. Therefore, if a rutile titanium dioxide powder with a high rutile content and an anatase titanium dioxide powder with a low rutile content, both possessing a small particle size, narrow particle size distribution, and large surface area, can be produced at any optional proportion, such a method is very advantageous due to the capability of efficiently producing the target product by appropriately selecting the manufacturing conditions according to the target application.

An object of the present invention is therefore to provide a rutile titanium dioxide powder with a high rutile content, having a small particle size, narrow particle size distribution, and large surface area, and a method for producing the same. Another object of the present invention is to provide a method for arbitrarily producing an anatase titanium dioxide powder with a low rutile content.

DISCLOSURE OF THE INVENTION

As a result of extensive studies to solve the aforementioned problems, the inventor of the present invention has found that a titanium dioxide powder with a large surface area and an arbitrarily controlled rutile content can be obtained by a gas phase hydrolyzation oxidation of titanium tetrachloride. This finding has led to the completion of the present invention.

Specifically, the present invention provides a titanium dioxide powder having a rutile content of 80% or more and a BET specific surface area of 30 m$^2$/g or more.

The present invention further provides a method for producing a titanium dioxide powder comprising reacting a titanium tetrachloride gas, oxygen gas, hydrogen gas, and steam in a gas phase, characterized by supplying the steam in an amount equal to or greater than a chemically equivalent amount necessary for oxidizing all of the titanium tetrachloride gas.

Differing from conventional titanium dioxide powders, the titanium dioxide powder of the present invention has a large BET specific surface area in spite of the high rutile content.

Using the method of the present invention, it is possible to arbitrarily produce a titanium dioxide powder having a very high rutile content in spite of the fine particle properties having a large specific surface area or an anatase type titanium dioxide powder having a large specific surface area. The titanium dioxide powder obtained using this method is suitably used as an electronic material such as barium titanate, a UV shielding material, a photocatalyst material, an antireflection film, a coating material for a glass substrate such as a plasma display requiring high reflection, and a filler.

BEST MODE FOR CARRYING OUT THE INVENTION

The rutile content of the titanium dioxide powder of the present invention is from 80% to 100%, preferably from 85% to 100%, and more preferably from 90% to 100%. The high rutile content ensures excellent engineering characteristics such as a high UV shielding effect, high refractive index, and the like, as well as superior electrical characteristics such as high dielectric characteristics.

The rutile content is measured by X-ray diffraction according to the method of ASTM D3720-84, in which the peak area (Ir) of the strongest diffraction line (plane indices 110) of rutile crystal titanium dioxide and the peak area (Ia) of the strongest diffraction line (plane indices 101) of anatase crystal titanium dioxide are measured and applied to the following formula.

$$\text{Rutile content (wt\%)} = 100 - 100/(1 + 1.2 \times \text{Ir/Ia})$$

The peak areas (Ir) and (Ia) refer to the areas projecting from the baseline in the applicable diffraction line of X-ray diffraction spectrum. These areas are determined by a known method such as a computer calculation, an approximation triangle-formation method, or the like.

The BET specific surface area of titanium dioxide powder of the present invention is from 30 to 100 m$^2$/g, preferably from 33 to 100 m$^2$/g, and more preferably from 35 to 100 m$^2$/g. If the BET specific surface area is greater than 30 m$^2$/g, titanium dioxide powder particles with a small particle size can be obtained.

Although there are no specific limitations, the average diameter of titanium dioxide powder particles, determined by SEM photograph image analysis is 100 nm or less, and preferably from 5 to 70 nm. Titanium dioxide powder with such a small particle size can be applied to laminated ceramic capacitors with an increased number of layers and a thinner dielectric layers and electrode layers.

It is desirable that the titanium dioxide powder of the present invention have a high purity, containing as small an amount of impurities as possible. The content of Fe, Al, Si, and Na contained in the titanium dioxide powder is respectively less than 100 ppm and the content of Cl is less than 1,000 ppm. More preferably, the content of Fe, Al, Si, and Na is respectively less than 20 ppm and the content of Cl is less than 500 ppm, with a more preferable Cl content being less than 50 ppm.

Because the titanium dioxide powder of the present invention has a very high rutile content and a high purity, even though the powder is composed of fine particles with a large specific surface area, the titanium dioxide powder has an advantage of exhibiting excellent electric characteristics such as dielectric characteristics when used as an electric material such as barium titanate.

The methods for producing the titanium dioxide powder of the present invention include, but are not limited to, a gas phase oxidizing method of oxidizing titanium tetrachloride by causing the titanium tetrachloride to come into contact with oxygen in a gas phase, a gas phase method such as a flame hydrolyzing method comprising supplying an inflammable gas such as hydrogen gas, which bums and generates water, together with oxygen to a combustion burner, thereby forming a flame, and introducing titanium tetrachloride into the flame, and a liquid phase method of obtaining titanium dioxide by reacting titanium tetrachloride, alkoxytitanium, or titanyl sulfate in a liquid phase. Of these methods, the gas phase method of hydrolyzing or oxidizing titanium tetrachloride in a gas phase is particularly advantageous due to the capability of efficiently producing titanium dioxide powder having a high rutile content and high specific surface area of the present invention. In addition, since titanium tetrachloride is reacted by causing it to come in contact with hydrogen gas, oxygen gas, or steam in the gas phase method, the product contains no residual impurities as in titanium dioxide produced by the liquid phase method. The titanium dioxide powder of the present invention can be produced by the method for producing titanium dioxide of the present invention which is later described.

In the method for producing a titanium dioxide powder of the present invention, titanium tetrachloride gas, oxygen gas, hydrogen gas, and steam are reacted in a gas phase, while supplying steam in the chemically equivalent amount necessary for oxidizing all of the titanium tetrachloride gas or more. If the amount of steam is less than the chemically equivalent amount necessary for oxidizing all of the titanium tetrachloride, the reaction for producing titanium dioxide does not uniformly proceed. Since the form of crystals of generated titanium dioxide cannot be controlled, it is difficult to obtain titanium dioxide powder with a high rutile content and a high specific surface area or anatase titanium dioxide powder with a high specific surface area.

The term "the chemically equivalent amount necessary for oxidizing all of the titanium tetrachloride" herein used indicates the chemically equivalent amount of steam when titanium tetrachloride is reacted only with steam, specifically two mols of steam (water) per one mol of titanium tetrachloride. In the present invention, steam is supplied in an amount in excess of the titanium tetrachloride. Specifically, an amount of steam, in terms of the gas volume under the normal state, 10 times or more, preferably 100 times or more of the titanium tetrachloride gas is supplied during the reaction. Oxygen is supplied preferably in the chemically equivalent amount necessary for oxidizing all of the titanium tetrachloride or more (one mol of oxygen per one mol of titanium tetrachloride). Specifically, oxygen in an amount, in terms of the gas volume under the normal state, 10 times or more of the titanium tetrachloride gas is supplied during the reaction.

The amounts of hydrogen gas, oxygen gas, and steam to be supplied per 1l of titanium tetrachloride gas, in terms of ratio of each gas under the normal state, are shown in the following TABLE 1.

TABLE 1

|  | Normal range | Preferable range | More preferable range |
| --- | --- | --- | --- |
| Hydrogen gas (1) | 10 to 500 | 20 to 200 | 30 to 100 |
| Oxygen gas (1) | 10 to 500 | 20 to 200 | 30 to 100 |
| Steam (1) | 100 to 2,000 | 300 to 1,500 | 500 to 1,000 |

The amount of each raw material gas supplied varies according to the scale of reaction, the diameters of the nozzles used for supplying each gas, and the like. A specific amount of each raw material gas is appropriately determined, preferably so that the feed rate of each gas, particularly of titanium tetrachloride gas, is in the turbulent flow region. In addition, each gas component may be supplied to the reaction zone after being diluted with an inert gas such as argon or nitrogen. In this manner, titanium dioxide powder with a high specific surface area and a high rutile content or anatase titanium dioxide powder with a low rutile content can be obtained by carrying out the reaction while setting the amounts of hydrogen gas, oxygen gas, and steam to be supplied per the amount of titanium tetrachloride in the above ranges.

The titanium tetrachloride gas, hydrogen gas, oxygen gas, and steam are preferably supplied to the reaction zone after preheating to 300-1,200°C, and more preferably to 450-950°C.

The gases are then reacted to produce titanium dioxide powder. To produce a desired titanium dioxide powder by the gas phase reaction, the reaction temperature should be a temperature sufficient to generate titanium dioxide, specifically, 900°C or less, preferably 400-900°C, and particularly preferably 450-850°C.

The rutile content of titanium dioxide powder produced can be controlled by controlling the preheating temperature of each supply gas and the reaction temperature in the above-mentioned range. Specifically, to produce titanium dioxide powder with a high rutile content of 80% or more, a preheating temperature of 750-950°C and a reaction temperature of 750-900°C are applied, and to produce anatase titanium dioxide powder with a low rutile content of 20% or less, a preheating temperature of 400-700°C and a reaction temperature of 450-700°C are applied.

After producing titanium dioxide powder by the reaction of the gases in the above manner, in order to prevent aggregation of produced particles, the reaction system is cooled at the highest possible cooling rate to the temperature at which titanium dioxide particles are sintered, specifically to a temperature lower than 300°C.

After removing chlorine components such as hydrogen chloride by heat treatment or the like, the titanium dioxide powder obtained in this manner is classified or sieved, as required.

A specific example of the process for producing titanium dioxide powder of the present invention will now be described. First, liquid titanium tetrachloride is vaporized by preheating to 500-900°C and, as required, diluted with nitrogen gas before being introduced to a reactor. Simultaneously with the introduction of titanium tetrachloride, oxygen gas, hydrogen gas, and steam preheated to 500-900°C, after dilution with nitrogen gas, as required, are introduced to the reactor, wherein the oxidation reaction is carried out at a temperature of usually 450-900°C, and preferably 500-900°C. Oxidation at a comparatively low temperature is preferred to obtain the titanium dioxide powder of the present invention. The produced titanium dioxide powder is introduced into a cooling section to cause the titanium dioxide powder to come into contact with a coolant gas such as air, thereby cooling the titanium dioxide powder to 300°C or less. After that, the produced titanium dioxide powder is collected to remove chlorine components remaining in the titanium dioxide powder by means of a heat treatment such as heating under vacuum, heating in an air or nitrogen gas atmosphere, or steam processing or by contact with alcohol, thereby obtaining the titanium dioxide powder of the present invention.

When rutile titanium dioxide powder is produced by the gas phase method, rutile titanium dioxide powder having a high specific surface area can be efficiently produced by employing comparatively high temperature conditions of 750-950°C, for example, without requiring a step of converting anatase titanium dioxide into rutile titanium dioxide by aging the titanium dioxide powder in an aqueous solution of inorganic acid. If comparatively low temperature conditions of 450-700°C are employed, anatase titanium dioxide powder with a high specific surface area can be efficiently produced.

According to the method for producing titanium dioxide powder of the present invention, a titanium dioxide powder which is composed of fine particles having a large specific surface area and also having a very high rutile content and an anatase type titanium dioxide powder having a large specific surface area can be arbitralily produced. Because these titanium dioxide powders have a narrow particle size distribution and a high purity, the titanium dioxide powders have an advantage of exhibiting excellent electric characteristics such as dielectric characteristics when used as an electric material such as barium titanate.

The titanium dioxide powder of the present invention can be produced by the method of the present invention.

EXAMPLE

The present invention is described below in more detail by examples. However, the following examples are merely given as illustrations and should not be construed as limiting the present invention.

Example 1

Titanium dioxide powder was prepared by the gas phase method of oxidizing titanium tetrachloride by causing it to come into contact with oxygen gas, hydrogen gas, and steam in a gas phase. Using a gas phase reaction pipe with an inner diameter of 400 mm equipped with a multiplex pipe burner on the top, titanium tetrachloride gas preheated to vaporize at 800°C and diluted with nitrogen gas was supplied to the multiplex pipe burner, while supplying hydrogen gas, oxygen gas, and steam preheated at 800°C from another nozzle, thereby effecting the oxidation reaction in the gas phase reaction pipe at 800°C to produce titanium dioxide powder. The feed rate of titanium tetrachloride gas, oxygen gas, hydrogen gas, and steam under the normal state was respectively 500 ml/min, 201/min, 201/min, and 3701/min. After that, dry air at room temperature was supplied to the cooling section in the lower part of the gas phase reaction pipe at a rate of 8001/min to cool the produced titanium dioxide powder. The resulting titanium dioxide powder was treated with heat at 350-400°C in the atmosphere for 10 hours. The average particle diameter, rutile content, specific surface area, content of impurities, and particle size distribution of the titanium dioxide powder were measured. The results are shown in TABLE 2. The average particle diameter, rutile content, specific surface area, content of impurities, and particle size distribution of the titanium dioxide powder were measured according to the following methods.

(Average particle diameter)

The powder was inspected using a scanning electron microscope to measure the average particle diameter by the intercepting method. The number of analyzed particles was 200.

(Rutile content)

The rutile content was measured by X-ray diffraction according to the method of ASTM D 3720-84, in which the peak area (Ir) of the strongest diffraction line (plane indices 110) of rutile crystal titanium dioxide and the peak area (Ia) of the strongest diffraction line (plane indices 101) of titanium dioxide powder were measured and the results were applied to the above-described formula. The X-ray diffraction analysis conditions were as follows.

(X-ray diffraction measurement conditions)

Instrument: RAD-1C (manufactured by Rigaku Corp.)
X-ray tube ball: Cu
Tube voltage and tube current: 40 kV, 30 mA
Slit: DS-SS: 1°, RS: 0.15 mm
Monochrometer: graphite
Measurement interval: 0.002°
Counting method: Scheduled counting method

(Specific surface area)

Measured by the BET method.

(Measurement of impurities)

Fe, Al, Si, and Na in titanium dioxide were measured by atomic absorption spectrometry. Cl in titanium dioxide was measured by absorption photometry.

(Particle size distribution)

Using a laser scattering diffraction particle size distribution analyzer (LA-700: Horiba, Ltd.), an appropriate amount of titanium dioxide powder was suspended in purified water, followed by the addition of a dispersant and application of ultrasonic wave for three minutes. The particle size was measured and the particle size distribution (volume statistic value) was determined. The particle size distribution (SPAN) was determined from D90 (90% particle size ($\square$m) in cumulative particle size), D50 (50% particle size ($\square$m) in cumulative particle size), and D10 (10% particle size ($\square$m) in cumulative particle size) according to the following formula.

$$SPAN = (D90 - D10)/D50$$

Example 2

Titanium dioxide powder was prepared in the same manner as in Example 1 except for preheating titanium tetrachloride, hydrogen gas, oxygen gas, and steam at 850°C. The particle diameter, rutile content, specific surface area, content of impurities, and particle size distribution of the resulting titanium dioxide powder were measured. The results are shown in TABLE 2.

Example 3

Titanium dioxide powder was prepared in the same manner as in Example 1 except for preheating titanium tetrachloride, hydrogen gas, oxygen gas, and steam at 900°C. The particle diameter, rutile content, specific surface area, content of impurities, and particle size distribution of the resulting titanium dioxide powder were measured. The results are shown in TABLE 2.

Example 4

Titanium dioxide powder was prepared in the same manner as in Example 1 except for increasing the feed rate of hydrogen gas and oxygen gas to 401/min. The particle diameter, rutile content, specific surface area, content of impurities, and particle size distribution of the resulting titanium dioxide powder were measured. The results are shown in TABLE 2.

Example 5

Using a gas phase reaction pipe with an inner diameter of 400 mm equipped with a multiplex pipe burner on the top, titanium tetrachloride gas preheated to vaporize at 700°C and diluted with nitrogen gas was supplied to the multiplex pipe burner, while supplying hydrogen gas, oxygen gas, and steam preheated at 700°C from another nozzle, thereby effecting the oxidation reaction in the gas phase reaction pipe at 700°C to produce titanium dioxide powder. The feed rate of titanium tetrachloride, oxygen gas, hydrogen gas, and steam under the normal state was respectively 500 ml/min, 201/min, 201/min, and 3701/min. After that, dry air at room temperature was supplied to the cooling section in the lower part of the gas phase reaction pipe at a rate of 8001/min to cool the produced titanium dioxide powder. The resulting titanium dioxide powder was treated with heat at 350-400°C in the atmosphere for 10 hours. The average particle diameter, rutile content, specific surface area, content of impurities, and particle size distribution of the resulting titanium dioxide powder were measured. The results are shown in TABLE 2.

Example 6

Titanium dioxide powder was prepared in the same manner as in Example 1 except for preheating titanium tetrachloride, hydrogen gas, oxygen gas, and steam at 600°C and reacting the mixture at 600°C. The particle diameter, rutile content, specific surface area, content of impurities, and particle size distribution of the resulting titanium dioxide powder were measured. The results are shown in TABLE 2.

Example 7

Titanium dioxide powder was prepared in the same manner as in Example 1 except for preheating titanium tetrachloride, hydrogen gas, oxygen gas, and steam at 500°C and reacting the mixture at 500°C. The particle diameter, rutile content, specific surface area, content of impurities, and particle size distribution of the resulting titanium dioxide powder were measured. The results are shown in TABLE 2.

Example 8

Titanium dioxide powder was prepared in the same manner as in Example 6 except for feeding hydrogen gas and oxygen gas at a rate of 401/min. The particle diameter, rutile content, specific surface area, content of impurities, and particle size distribution of the resulting titanium dioxide powder were measured. The results are shown in TABLE 3.

Example 9

Titanium dioxide powder was prepared in the same manner as in Example 6 except for feeding hydrogen gas and oxygen gas at a rate of 501/min. The particle diameter, rutile content, specific surface area, content of impurities, and particle size distribution of the resulting titanium dioxide powder were measured. The results are shown in TABLE 3.

Example 10

Titanium dioxide powder was prepared in the same manner as in Example 6 except for feeding hydrogen gas and oxygen gas at a rate of 601/min. The particle diameter, rutile content, specific surface area, content of impurities, and particle size distribution of the resulting titanium dioxide powder were measured. The results are shown in TABLE 3.

Example 11

Titanium dioxide powder was prepared in the same manner as in Example 7 except for feeding hydrogen gas and oxygen gas at a rate of 401/min. The particle diameter, rutile content, specific surface area, content of impurities, and particle size distribution of the resulting titanium dioxide powder were measured. The results are shown in TABLE 3.

Comparative Example 1

Using a gas phase reaction pipe with an inner diameter of 400 mm equipped with a multiplex pipe burner on the top, titanium tetrachloride gas preheated to vaporize at 1,100°C and diluted with nitrogen gas was supplied to the multiplex pipe burner, while supplying a mixture of oxygen gas and steam preheated at 1,000°C from another nozzle, thereby effecting the oxidation reaction in the gas phase reaction pipe at 1,000°C to produce titanium dioxide powder. The feed rate of titanium tetrachloride, oxygen gas, hydrogen gas, and steam under the normal state was respectively 500 ml/min, 340 ml/min, 850 ml/min, and 370 ml/min. After that, dry air at room temperature was supplied to the cooling section in the lower part of the gas phase reaction pipe at a rate of 8001/min to cool the produced titanium dioxide powder. The average particle diameter, rutile content, specific surface area, content of impurities, and particle size distribution of the resulting titanium dioxide powder were measured. The results are shown in TABLE 3.

Comparative Example 2

Using a gas phase reaction pipe with an inner diameter of 400 mm equipped with a multiplex pipe burner on the top, a mixture of titanium tetrachloride gas and hydrogen gas preheated to vaporize at 800°C was supplied to the multiplex pipe burner, while supplying oxygen gas preheated at 800°C from another nozzle, thereby effecting the oxidation reaction in the gas phase reaction pipe at 1,000°C to produce titanium dioxide powder. The feed rate of titanium tetrachloride, hydrogen gas, and oxygen gas was respectively 601/min, 401/min, and 3801/min. After that, the produced titanium dioxide powder was cooled by injecting air from the bottom of the gas phase reaction pipe at a rate of 4001/min. The resulting titanium dioxide powder was treated with heat at 350-400°C in the atmosphere for 10 hours. The particle diameter, rutile content, specific surface area, content of impurities, and particle size distribution of the resulting titanium dioxide powder were measured. The results are shown in TABLE 3.

Comparative Example 3

Using a gas phase reaction pipe with an inner diameter of 400 mm equipped with a multiplex pipe burner on the top, titanium tetrachloride gas preheated to vaporize at about 800°C was supplied to the multiplex pipe burner, while supplying oxygen gas and steam preheated at 800°C from another nozzle, thereby effecting the oxidation reaction in the gas phase reaction pipe at about 1,000°C to produce titanium dioxide powder. The feed rate of titanium tetrachloride, oxygen gas, and steam was respectively 200 l/min, 380 l/min, and 1701/min. After that, the produced titanium dioxide powder was cooled by injecting air from the bottom of the gas phase reaction pipe at a rate of 1001/min. The resulting titanium dioxide powder was treated with heat at 350-400°C in the atmosphere for 10 hours. The particle diameter, rutile content, specific surface area, content of impurities, and particle size distribution of the resulting titanium dioxide powder were measured. The results are shown in TABLE 3.

TABLE 2

| | Example | | | | | | |
|---|---|---|---|---|---|---|---|
| | 1 | 2 | 3 | 4 | 5 | 6 | 7 |
| Particle diameter (nm) | 38 | 48 | 52 | 50 | 39 | 42 | 42 |
| Rutile content (%) | 90.0 | 91.7 | 89.5 | 92.2 | 12.0 | 2.0 | 0.7 |
| BET specific surface area ($m^2$/g) | 43.0 | 35.0 | 34.0 | 34.5 | 43.0 | 39.5 | 40.4 |
| Content of impurities (ppm) Fe Al Si Na | 10 10> 10> 10> | 10 10> 10> 10> | 10 10> 10> 10> | 10 10> 10> 10> | 10 10> 10> 10> | 10 10> 10> 10> | 10 10> 10> 10> |

(continued)

| Content of impurities (ppm) Cl | 100 | 80 | 90 | 80 | 80 | 80 | 80 |
|---|---|---|---|---|---|---|---|
| Particle size distribution | | | | | | | |
| D90 | 1.10 | 0.83 | 0.81 | 0.97 | 0.91 | 1.02 | 0.95 |
| D50 | 0.29 | 0.35 | 0.30 | 0.39 | 0.27 | 0.32 | 0.30 |
| D10 | 0.13 | 0.15 | 0.19 | 0.14 | 0.15 | 0.15 | 0.16 |
| SPAN | 3.3 | 1.9 | 2.1 | 2.1 | 2.8 | 2.7 | 2.6 |

TABLE 3

| | Example | | | | Comparative Example | | |
|---|---|---|---|---|---|---|---|
| | 8 | 9 | 10 | 11 | 1 | 2 | 3 |
| Particle diameter (nm) | 40 | 35 | 30 | 37 | 80 | 132 | 163 |
| Rutile content (%) | 6.2 | 11.8 | 3.2 | 2.2 | 91.5 | 85.0 | 87.5 |
| BET specific surface area ($m^2/g$) | 42.4 | 45.0 | 46.2 | 44 | 22 | 12.5 | 10.3 |
| Content of impurities (ppm) | | | | | | | |
| Fe | 10 | 10 | 10 | 10 | 10 | 10 | 10 |
| A1 | 10> | 10> | 10> | 10> | 10> | 10> | 10 |
| Si | 10> | 10> | 10> | 10> | 10> | 10> | 10> |
| Na | 10> | 10> | 10> | 10> | 10> | 10> | 10> |
| Cl | 80 | 80 | 80 | 80 | 110 | 40 | 100 |
| Particle size distribution | | | | | | | |
| D90 | 0.85 | 0.92 | 0.95 | 0.90 | 1.50 | 1.60 | 1.62 |
| D50 | 0.28 | 0.25 | 0.25 | 0.28 | 0.40 | 0.37 | 0.48 |
| D10 | 0.13 | 0.15 | 0.12 | 0.16 | 0.25 | 0.23 | 0.30 |
| SPAN | 2.6 | 3.1 | 3.3 | 2.6 | 3.1 | 3.7 | 2.7 |

As can be seen from TABLE 2 and TABLE 3, titanium dioxide powders obtained in Examples 4 to 5, in which titanium tetrachloride was reacted with an excess amount of steam at 800-900°C, exhibited a high rutile content of 89.5% or more and a high specific surface area of 34 $m^2/g$ or more. Titanium dioxide powders obtained in Examples 5 to 11, in which titanium tetrachloride was reacted with an excess amount of steam at 500-700°C, exhibited a low rutile content of 12.0% or less and a high specific surface area of 39.5 $m^2/g$ or more. Titanium dioxide powders obtained in Example 1 to 11 possessed a narrow particle size distribution and exhibited excellent dispersibility in a solvent in spite of the very small average particle diameter of 50 nm or less. Titanium dioxide powders obtained in Comparative Examples 1 and 3, in which hydrogen gas was not supplied and a surplus amount of steam was not supplied, exhibited a broad particle size distribution with a specific surface area of less than 30 $m^2/g$. Titanium dioxide powder obtained in Comparative Example 2, in which steam was not supplied, had a small specific surface area and a broad particle size distribution. Examples 12 to 15 and Comparative Examples 4 to 6

The titanium dioxide obtained in Examples 1 to 4 and Comparative Examples 1 to 3 was mixed with barium carbonate at a molar ratio of 1:1 and the mixture was wet-milled in a ball mill. The milled mixture was filtered, dried, heated from room temperature to 1,140°C at a rate of temperature increase of 180°C/hour, and sintered at 1,140°C for two hours to obtain barium titanate powder. 0.58 mol of barium oxide, 0.42 mol of calcium oxide, 2.00 mols of magnesium oxide, 0.375 mol of manganese oxide, 3.00 mols of silicon oxide, 2.13 mols of dysprosium oxide, 0.050 mol of vanadium oxide, and 0.500 mol of tantalum oxide were added to 100 mols of the resulting barium titanate powder. The mixture was wet-milled for 16 hours using a ball mill to obtain a dielectric composition. After the addition of a prescribed amount of a dispersant and PVB as a binder to the dielectric composition powder thus obtained, a cellosolve organic solvent was further added as a dispersion medium. The mixture was milled in a bead mill to obtain a slurry. The slurry was made into a film by the doctor blade method to obtain a green sheet with a thickness of 20 □m. A nickel powder paste was printed onto the green sheet in a predetermined printing pattern to serve as an internal electrode. Prescribed sheets of the green sheets on which the internal electrode was printed were trimming-laminated and heat-pressed to obtain a green laminate body. The green laminate body was processed at 350°C in the atmosphere to remove the binder and sintered at 1,300°C for two hours in a wet mixed gas of hydrogen and nitrogen, followed by annealing at 1,000°C for six hours in a nitrogen atmosphere. A copper paste was printed on this sintered body as an external electrode to obtain a laminated cerainic capacitor. The dielectric constant of the laminated ceramic capacitor was measured using an LCR meter (1kH, 1V). The results are shown in TABLE 4.

TABLE 4

| | Titanium dioxide used for dielectric compositions | Dielectric constant (F/m) |
|---|---|---|
| Example 12 | Example 1 | 2,880 |
| Example 13 | Example 2 | 2,750 |
| Example 14 | Example 3 | 2,732 |
| Example 15 | Example 4 | 2,746 |
| Comparative Example 4 | Comparative Example 1 | 1,530 |
| Comparative Example 5 | Comparative Example 2 | 1,460 |
| Comparative Example 6 | Comparative Example 3 | 1,445 |

As can be seen in TABLE 4, the laminated ceramic capacitors of Examples 12 to 15, which were prepared using barium titanate produced using the titanium dioxide powder with a 80% or more rutile content and 30 m$^2$/g or more BET specific surface area of the present invention (Examples 1 to 4) as a main component, possessed higher dielectric constant than those of Comparative Examples 4 to 6, and thus exhibited excellent dielectric properties.

INDUSTRIAL APPLICABILITY

The titanium dioxide powder of the present invention is suitably used as a coating material for a glass substrate and a filler. The method of the present invention can be employed for arbitrarily producing a titanium dioxide powder which is composed of fine particles having a large specific surface area and also having a very high rutile content or an anatase type titanium dioxide powder having a large specific surface area.

**Claims**

1.   A titanium dioxide powder having a rutile content of 80% or more and a BET specific surface area of 30 m$^2$/g or more.

2.   The titanium dioxide powder according to claim 1, wherein the rutile content is 85% or more.

3.   The titanium dioxide powder according to claim 1, obtained by a gaseous phase method using titanium tetrachloride as a raw material.

4.   The titanium dioxide powder according to claim 1, obtained by reacting titanium tetrachloride, oxygen gas, hydrogen gas, and steam in a gaseous phase.

5.   The titanium dioxide powder according to claim 1, obtained by reacting titanium tetrachloride, oxygen gas, hydrogen gas, and steam in a gaseous phase after preheating.

6.   A method for producing a titanium dioxide powder comprising reacting a titanium tetrachloride gas, oxygen gas, hydrogen gas, and steam in a gas phase, **characterized by** supplying the steam in an amount equal to or greater than a chemically equivalent amount necessary for oxidizing all of the titanium tetrachloride gas.

7.   The method according to claim 6, wherein the steam is supplied in an amount of 100 to 2,0001 per 11 of titanium tetrachloride gas.

8.   The method according to claim 6, wherein the titanium tetrachloride, oxygen gas, hydrogen gas, and steam are reacted in a gaseous phase after preheating.

9. The method according to claim 6, wherein the titanium oxide powder has a BET specific surface area of 30 m$^2$/g or more.

10. The method according to claim 6, wherein the reaction is carried out at 750-950°C and the titanium oxide powder obtained has a rutile content of 80% or more.

11. The method according to claim 6, wherein the reaction is carried out at 450-700°C and the titanium oxide powder obtained has a rutile content of 20% or more.

<table>
<tr><td colspan="2">**INTERNATIONAL SEARCH REPORT**</td><td colspan="2">International application No.<br>PCT/JP2004/014553</td></tr>
</table>

**A. CLASSIFICATION OF SUBJECT MATTER**
Int.Cl$^7$  C01G23/07

According to International Patent Classification (IPC) or to both national classification and IPC

**B. FIELDS SEARCHED**

Minimum documentation searched (classification system followed by classification symbols)
Int.Cl$^7$  C01G23/00-23/08

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-151510 A  (Toho Titanium Co., Ltd.),<br>05 June, 2001 (05.06.01),<br>Claims; Par Nos. [0019] to [0027], [0034]<br>(Family: none) | 1-11 |
| X | JP 2001-151509 A  (Toho Titanium Co., Ltd.),<br>05 June, 2001 (05.06.01),<br>Full text<br>(Family: none) | 1-11 |
| X | JP 2001-287997 A  (Toho Titanium Co., Ltd.),<br>16 October, 2001 (16.10.01),<br>Claims; Par Nos. [0013] to [0026]<br>(Family: none) | 1-11 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 December, 2004 (28.12.04) | Date of mailing of the international search report<br>25 January, 2005 (25.01.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
|---|
| PCT/JP2004/014553 |

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2001-114519 A (Sumitomo Chemical Co., Ltd.),<br>24 April, 2001 (24.04.01),<br>Claims<br>& DE 10039167 A1 | 1-2<br>3-11 |

Form PCT/ISA/210 (continuation of second sheet) (January 2004)